# EUROPÄISCHE PATENTSCHRIFT

(11) **EP 0 531 688 B1**
(45) Veröffentlichungstag und Bekanntmachung des Hinweises auf die Patenterteilung: **24.09.1997**
(21) Anmeldenummer: 92112822.9
(22) Anmeldetag: 28.07.1992
(51) Int. Cl.: A01D 75/28, B60G 9/00, B60G 17/01

(54) **Hangausgleichseinrichtung**
Slope compensating device
Compensateur de pente

(30) Priorität: 07.08.1991 US 741849
(43) Veröffentlichungstag der Anmeldung: 17.03.1993
(73) Patentinhaber: DEERE & COMPANY, Moline, Illinois 61265 (US)
(72) Erfinder: Love, Mahlon Lloyd, Geneseo, Illinois (US); Luxon, Gary Deloy, Moline, Illinois (US)
(74) Vertreter: Feldmann, Bernhard

(56) Entgegenhaltungen:
- EP-A- 0 234 585
- EP-A- 0 235 960
- EP-A- 0 428 075
- DE-A- 3 922 260
- FR-A- 2 098 012
- FR-A- 2 098 106
- US-A- 3 731 470
- US-A- 3 869 015

## Beschreibung

Die Erfindung betrifft eine Hangausgleichseinrichtung für ein Fahrzeug, insbesondere für eine Erntemaschine, mit einer Querachse, die abhängig von einer Hangneigung verstellbar an einen Tragrahmen anschließbar ist.

Die US-A-3,703,298 offenbart einen Mähdrescher mit einem Tragrahmen, der mittels einer Hangausgleichseinrichtung über Räder auf dem Boden abgestützt ist. Die Hangausgleichseinrichtung besteht aus einer Achse, die endseitig die Räder drehbar aufnimmt und mittig vertikal pendelnd an einem Lagerbock aufgehängt ist. Nahe der Räder greift jeweils ein in einem Hydraulikzylinder geführter Kolben an, über den die Achse gegenüber dem Fahrgestell in eine andere Neigung bringbar ist.

Diese Hangausgleichseinrichtung ist nachteilig, weil der Tragrahmen des Mähdreschers im Aufnahmebereich der Achse umfangreich gegenüber der Bauweise für einen auf der Ebene eingesetzten Mähdrescher umgestaltet werden muß.

Die DE-A-39 22 260 zeigt einen Mähdrescher mit einer schwenkbaren Achse, die nicht mittig, sondern endseitig um einen horizontal verlaufenden Bolzen schwenkbar ist. Die Verstellung der Achse gegenüber dem Tragrahmen erfolgt mittels eines Hydraulikzylinders, der sich zwischen dem dem Bolzen gegenüberliegenden Endbereich der Achse und dem Tragrahmen erstreckt. Demzufolge findet an dem einen Endbereich der Achse eine große Lageänderung der Achse gegenüber dem Tragrahmen statt, während an dem anderen Endbereich diese Lageänderung unwesentlich ist.

Diese Hangausgleichseinrichtung ist insofern nachteilig, als der mit dem Hydraulikzylinder verbundene Endbereich einen doppelt so großen Bewegungsfreiraum benötigt wie z. B. der nach der US-A-3,703,298.

Die der Erfindung zugrunde liegende Aufgabe wird darin gesehen, eine Hangausgleichseinrichtung vorzuschlagen, die mit möglichst geringem Anpassungsaufwand an eine Erntemaschine in einer Bauweise für den Einsatz in der Ebene anbringbar ist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise kann an einen im wesentlichen unveränderten Tragrahmen einer Erntemaschine eine Querachse angebaut werden, die mit Hilfe der Betätigungsvorrichtungen gegenüber dem Tragrahmen verstellt werden kann. Die Verbindung erfolgt über die Lenker, die auch zugleich die Querachse während der Höhenbewegung führen können, sofern eine Führung überhaupt erforderlich ist. Bei den Betätigungsvorrichtungen handelt es sich zwar vorteilhafterweise um Hydraulikmotoren; dennoch ist die Verwendung von Seilzügen, Gestängen, Pneumatikmotoren oder gar Elektromotoren auch mit umfaßt. Bei den Fahrzeugen kommt grundsätzlich jede Art in Betracht; allerdings wird insbesondere bei Mähdreschern ein Ausgleich der Hangneigung gefordert, damit der Abscheideprozeß nicht negativ beeinflußt wird.

Sofern eine Führung der Querachse während der Höhenbewegung erforderlich ist, kann diese durch Gleitelemente zur Anlage der Querachse an dem Tragrahmen oder dergleichen erfolgen. Vorzugsweise wird allerdings wenigstens ein dritter Lenker eingesetzt, der die Relativbewegung der Querachse zu dem Tragrahmen steuert.

Die parallel und nach vorne gerichtete Ausrichtung der Lenker führt zur Bildung eines Parallelogrammgestänges, das eine Parallelverschiebung der Querachse in dem erforderlichen Höhenbereich gewährleistet.

Eine schwenkbare Anbringung der Lenker an beiden Enden stellt eine Höhenbeweglichkeit der Querachse ohne großen Bewegungswiderstand und somit einen zuverlässigen Bewegungsablauf sicher.

Eine raumsparende Ausbildung der Hangausgleichseinrichtung ist gegeben, wenn die Querachse zwischen, d. h. sandwichartig zwischen den Lenkern aufgenommen wird. Außerdem findet dadurch eine optimale Kräfteeinleitung in die Querachse statt.

Um das auf die Lenker einwirkende Biegemoment in der Längsrichtung der Querachse zu reduzieren, wird eine ebenfalls endseitig gelenkig angebrachte Haltestange verwendet, die sich im wesentlichen in der Richtung dieser Kräfte erstreckt.

Die Höhenbeweglichkeit der Querachse erfährt keine Einschränkung durch die Antriebskomponenten, wenn ein hydraulisch angetriebenes Getriebe verwendet wird, dem die Antriebsenergie über bewegliche Schläuche zugeführt wird.

Zur Steuerung der Stellung der Querachse gegenüber dem Tragrahmen werden die Betätigungsvorrichtungen von zwei doppelt wirkenden linearen Hydraulikmotoren mit jeweils einer kolbenstangenseitigen Kammer und einer kolbenseitigen Kammer gebildet, wobei von einer Druckquelle gelieferte Druckflüssigkeit der kolbenstangenseitigen Kammer zugeführt wird und die kolbenseitigen Kammern über eine Querleitung miteinander in Verbindung stehen. Die Verbindung mittels der Querleitung gewährleistet eine Synchronisation der beiden Betätigungsvorrichtungen während ihrer Bewegung.

Das Steuersignal zum Verstellen der Betätigungsvorrichtungen wird von einem Neigungsfühler abgenommen, in einer Regel- oder Steuervorrichtung bearbeitet und einem 4-Stellungs-3-Wegeventil zugeführt, das das Druckmittel der einen oder der anderen Betätigungsvorrichtung zuführt.

Zur Vermeidung eines Druckverlusts in einer Betätigungsvorrichtung, wenn z. B. eine Leitung platzt, ist eine Strömungssicherung in der Querleitung vorgesehen, die das Abströmen von Flüssigkeit aus der Betätigungsvorrichtung unterbindet, sobald ein eingestellter Strömungswert überschritten wird.

In der Zeichnung ist ein nachfolgend näher beschriebenes Ausführungsbeispiel der Erfindung dargestellt. Es zeigt:
- Fig. 1: eine Erntemaschine mit einer Hangausgleichseinrichtung in Seitenansicht und in schematischer Darstellung,

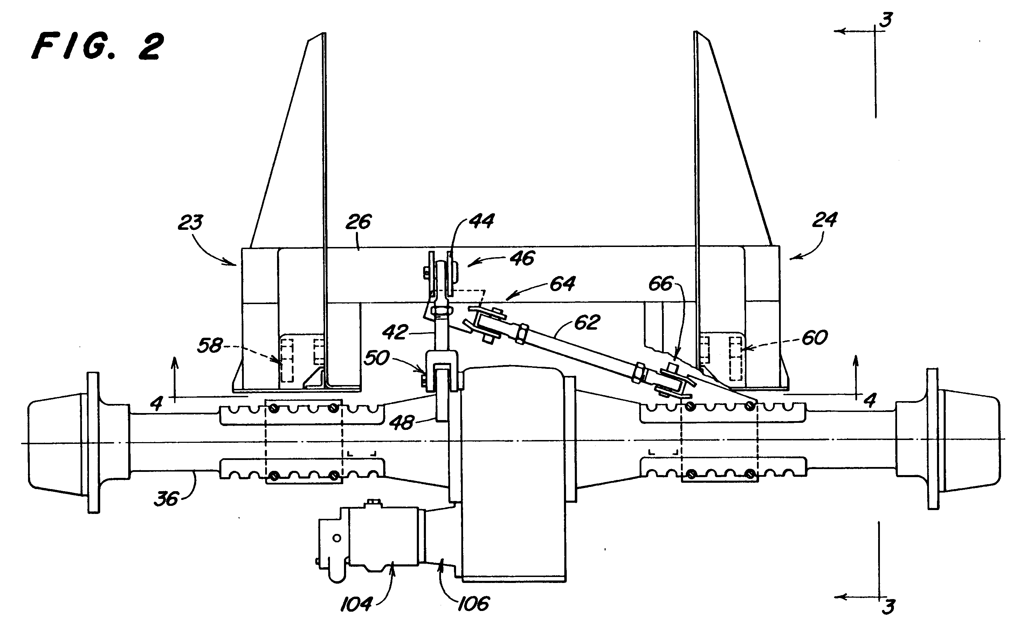

- Fig. 2: die Hangausgleichseinrichtung in Draufsicht,

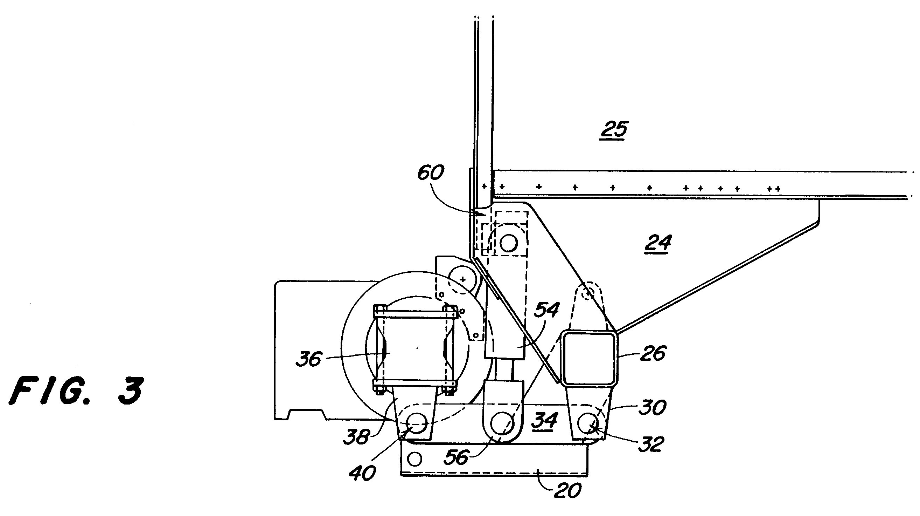

- Fig. 3: die Hangausgleichseinrichtung in Seitenansicht,

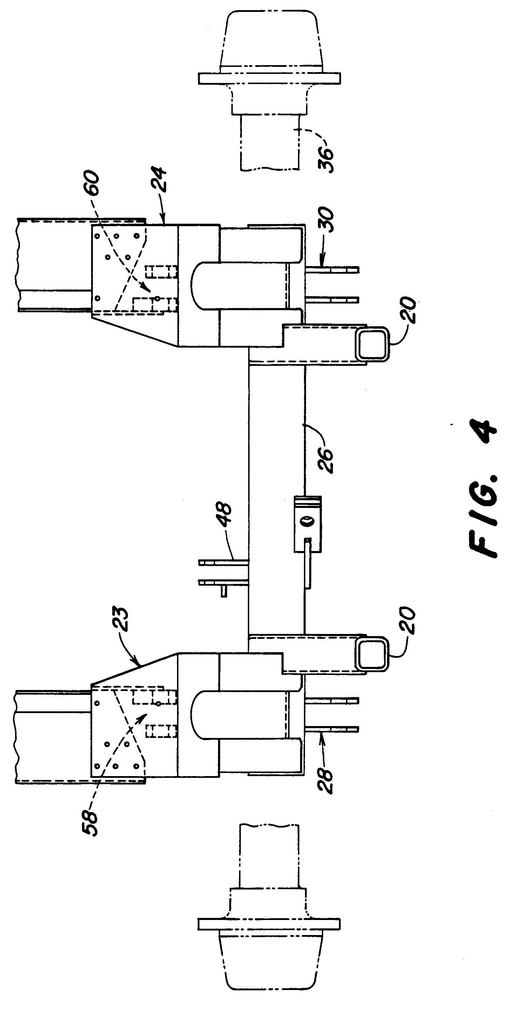

- Fig. 4: die Hangausgleichseinrichtung in Vorderansicht und
- Fig. 5: einen Hydraulikschaltplan für die Hangausgleichseinrichtung.

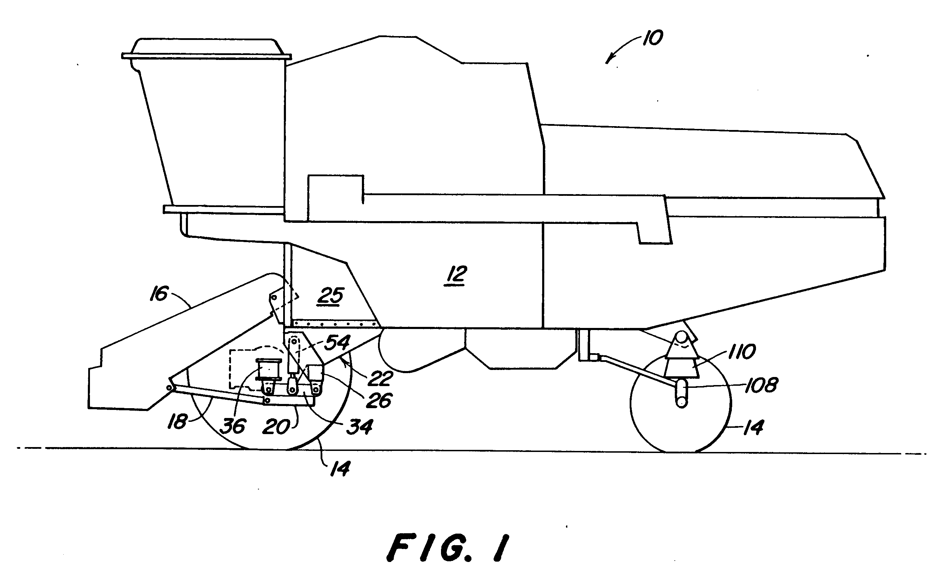

Figur 1 zeigt eine Erntemaschine 10 in der Art eines Mähdreschers mit einem Tragrahmen 12, der sich auf dem Boden mittels Rädern 14 abstützt. Der Tragrahmen 12 umschließt eine Dreschvorrichtung zum Dreschen von Erntegut, eine Abscheidevorrichtung, um Spreu und Körner aus dem Stroh abzuscheiden, und eine Reinigungsvorrichtung, um die Spreu von den Körnern zu trennen. Die Erntemaschine 10 kann hierzu eine Dresch-, Abscheide- und Reinigungsvorrichtung bekannter Bauart verwenden.

Von dem Tragrahmen 12 aus erstreckt sich nach vorne ein Zufuhrgehäuse 16, an das eine nicht gezeigte Erntegutaufnahmevorrichtung angeschlossen werden kann. Das Zufuhrgehäuse 16 und die damit verbundene Erntegutaufnahmevorrichtung werden mittels Hubzylindern 18 angehoben und abgesenkt, die wiederum an dem Tragrahmen 12 über ein Rohrprofil 20 angreifen. Die Erntegutaufnahmevorrichtung erntet das Erntegut und leitet es dem Zufuhrgehäuse 16 zu, das es der Dreschvorrichtung aufgibt. Die Erntegutaufnahmevorrichtung ist um eine axiale, längs ausgerichtete Achse schwenkbar und kann ähnlich oder gleich der in der US 4,776,153 offenbarten ausgebildet sein, deren Inhalt hiermit einbezogen wird.

Ein Unterbau 22 ist an die Unterseite der Erntemaschine 10 angebracht, insbesondere angeschweißt und wird somit zu einem Bestandteil des Tragrahmens 12. Der Unterbau 22 enthält erste und zweite Befestigungskonsolen 23 und 24, die an Seitenteile 25 des Tragrahmens 12 angeschweißt sind. Ein Rohr 26 von rechtwinkligem viereckigem Querschnitt ist mit den Befestigungskonsolen 23 und 24 verschweißt und erstreckt sich quer über die Erntemaschine 10. Von dem Rohr 26 erstrecken sich nach unten erste und zweite Befestigungslaschen 28, 30, von denen jede mit einem Kugelgelenk 32 versehen ist.

Erste und zweite sich nach vorne erstreckende Lenker 34 sind mit den ersten und zweiten Befestigungskonsolen 23, 24 über die Kugelgelenke 32 verbunden. Der erste und zweite vordere Lenker 34 sind identisch und erstrecken sich in der Längsrichtung der Erntemaschine 10 parallel zueinander nach vorne, wobei nur der zweite und auf der linken Seite der Erntemaschine 10 angeordnete Lenker 34 gezeigt ist. Eine vordere Querachse 36 ist oberhalb des ersten und des zweiten Lenkers 34 angeordnet und mit diesen Lenkern 34 über erste und zweite Befestigungslaschen 38 verbunden, die sich von der Querachse 36 nach unten erstrecken, wobei wiederum nur die auf der linken Seite der Erntemaschine 10 vorgesehene Befestigungslasche 38 gezeigt ist. Jede Befestigungslasche 38 ist mit einem Kugelgelenk 40 versehen, das gleich oder identisch mit dem Kugelgelenk 32 des Unterbaus 22 ist.

Ein dritter Lenker 42 ist an der Oberseite des Rohrs 26 angebracht, und zwar mittels eines Kugelgelenks 46 an Befestigungslaschen 44. Dieser Lenker 42 erstreckt sich ebenfalls in der Längsrichtung der Erntemaschine 10 nach vorne und greift an der Querachse 36 mittels einer Befestigungsöse 48 an. Wie bereits bei den Befestigungslaschen 44 ist auch die Befestigungsöse 48 mit einem Kugelgelenk 50 bestückt, um den dritten Lenker 42 an die Querachse 36 anzuschließen.

Eine erste und zweite als linearer Hydraulikmotor ausgebildete Betätigungsvorrichtung 52 und 54 sind zwischen dem ersten und dem zweiten Lenker 34 einerseits und der ersten und der zweiten Befestigungskonsole 23 und 24 des Unterbaus 22 andererseits angeschlossen. Die Betätigungseinrichtungen 52 und 54 sind an ersten und zweiten unteren Befestigungspunkten 56 mit dem ersten und dem zweiten Lenker 34 und an ersten und zweiten oberen Befestigungspunkten 58 und 60 mit den ersten und den zweiten Befestigungskonsolen 23, 24 verbunden. Diese Betätigungseinrichtungen 52 und 54 werden dazu benutzt, die Neigung der vorderen Querachse 36 in bezug auf den Tragrahmen 12 zu verstellen, um den Tragrahmen 12 in einer waagrechten Stellung zu halten.

Eine Haltestange 62 ist quer zu der Längsrichtung der Erntemaschine 10 zwischen dem Rohr 26 des Unterbaus 22 und der Querachse 36 befestigt. An dem Unterbau 22 greift die Haltestange 62 über ein Kugelgelenk 64 und an der Querachse 36 über ein Kugelgelenk 66 an.

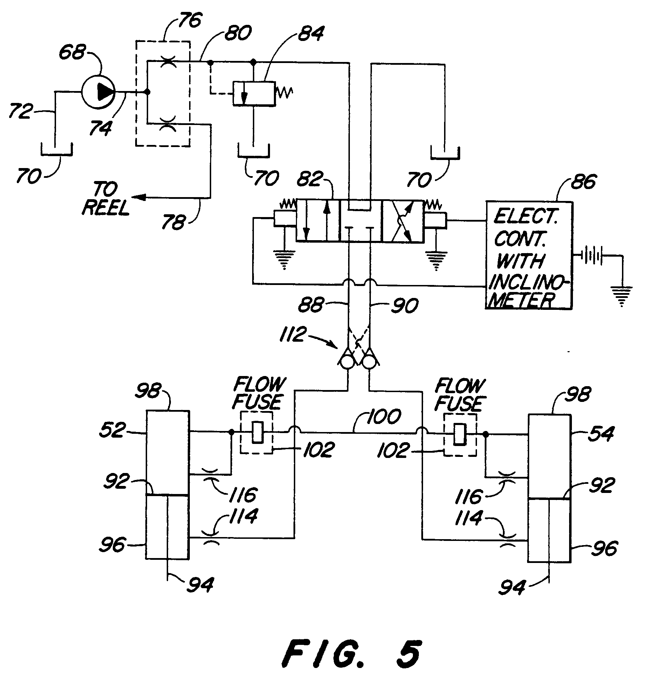

Figur 5 zeigt den Hydraulikschaltplan zum Verstellen der Betätigungseinrichtungen 52, 54. Eine Druckquelle 68 in der Art einer Hydraulikpumpe saugt Öl aus einem Vorratsbehälter 70 durch eine Zufuhrleitung 72 und führt unter Druck gesetztes Öl auch zu einer Haspel auf der Erntegutaufnahmevorrichtung. Weiterhin wird Drucköl von der Druckquelle 68 durch eine Leitung 74 einem Mengenteiler 76 aufgegeben, der es zwischen einer Leitung 78 für die Haspel und einer Leitung 80 für die Hangausgleichseinrichtung aufteilt.

Die Leitung 80 leitet unter Druck stehende Hydraulikflüssigkeit einem elektromagnetisch betätigtem Steuerventil 82 in einer 4-Wege-3-Stellungsbauweise zu, das den Zufluß der Druckflüssigkeit zu den Betätigungseinrichtungen 52 und 54 reguliert. Die Leitung 80 ist mit einem Druckbegrenzungsventil 84, mit dem die Flüssigkeit zurück zum Vorratsbehälter 70 geführt werden kann, verbunden. Eine elektrische Regel- oder Steuervorrichtung 86 mit einem Neigungssensor verstellt automatisch das Steuerventil 82, um den Tragrahmen 12 in einer waagrechten Stellung zu halten. Von dem Steuerventil 82 aus wird Druckflüssigkeit der ersten und der zweiten Betätigungseinrichtung 52 und 54 durch erste und zweite Vor- und Rücklaufleitungen 88 und 90 zugeführt, die die Druckflüssigkeit an der Kolbenstangenseite der ersten bzw. zweiten Betätigungseinrichtung 52 bzw. 54 aufgeben. Die erste und zweite Betätigungseinrichtung 52 und 54 ist mit einem Kolben 92 und einer Kolbenstange 94 versehen. Der Kolben 92 unterteilt den Zylinderraum in eine kolbenstangenseitige Kammer 96 und eine offene oder kolbenseitige Kammer 98. Eine Querleitung 100 erstreckt sich zwischen den kolbenseitigen Kammern 98 der Betätigungseinrichtungen 52, 54, so daß Flüssigkeit von der kolbenseitigen Kammer 98 der einen Betätigungseinrichtung 52 zu der der anderen Betätigungseinrichtung 54 und umgekehrt bewegt werden kann.

Strömungssicherungen 102 sind zwischen der Querleitung 100 und der kolbenseitigen Kammer 98 der Betätigungseinrichtungen 52, 54 eingefügt und können von dem Typ sein, der von Fa. Sun Hydraulics in Sarasota, Florida verkauft wird. Strömungssicherungen 102 dieser Bauart erlauben es einer Flüssigkeit, zwischen den Betätigungseinrichtungen 52, 54 unter einer normalen Strömung zu fließen, aber sie schließen und stellen jede Strömung ab, wenn eine Leitung bricht und die Strömung zwischen den Betätigungseinrichtungen 52, 54 den an der Strömungssicherung 102 eingestellten Wert übersteigt.

Die Vor- und Rücklaufleitungen 88, 90 sind mit einem doppelten pilotgesteuerten Rückschlagventilzusammenbau 112 versehen. Begrenzer 114, z. B. Drosseln oder Blenden in den Vor- und Rücklaufleitungen 88, 90 bauen einen Rückstaudruck in dem Rückschlagventilzusammenbau 112 auf, der die Rückschlagventile in den Leitungen öffnet, durch die die Flüssigkeit abgelassen wird. Die Betätigungseinrichtungen 52, 54 sind auch mit einem Synchronisieranschluß 116 versehen, der die Querleitung 100 und die kolbenseitigen Kammern 98 der gegenüberliegenden Betätigungseinrichtungen 52, 54 beaufschlagt.

Die Vorderachse ist eine Querachse 36 mit einem Hydraulikmotor 104 und einem Getriebe 106. Der Aufbau des Getriebes ist am besten in der europäischen Patentanmeldung 0 428 075 beschrieben, auf deren Inhalt hiermit ausdrücklich Bezug genommen wird.

Infolge der Verwendung dieser hauptsächlich aus der Querachse 36, den Lenkern 34 und den Betätigungseinrichtungen 52, 54 bestehenden Hangausgleichseinrichtung in einer Erntemaschine, z. B. in einem Mähdrescher wird die Vorderachse abgesenkt, um eine Anpassung des Zusammenbaus zu bewirken. Demzufolge muß auch die Hinterachse 108 um das gleiche Maß abgesenkt werden, um die Erntemaschine 10 in der Längsrichtung auszunivellieren. Ein Distanzstück 110 ist an der Hinterachse 108 angebracht, um diese das gleiche Maß wie die Vorderachse gegenüber dem Tragrahmen 12 abzusenken.

Die vorliegende Erfindung ergibt eine vereinfachte, sich selbstausrichtende Hangausgleichseinrichtung für einen Mähdrescher, ohne auf diese Anwendung beschränkt zu sein.

## Patentansprüche

1. Hangausgleichseinrichtung für ein Fahrzeug, insbesondere für eine Erntemaschine (10), mit einer Querachse (36), die abhängig von einer Hangneigung verstellbar an einen Tragrahmen (12) anschließbar ist, dadurch gekennzeichnet, daß die Querachse (36) über wenigstens zwei Lenker (34) an dem Tragrahmen (12) anbringbar ist, die über Betätigungsvorrichtungen (52, 54) in der Höhe verstellbar sind.

2. Hangausgleichseinrichtung nach Anspruch 1, dadurch gekennzeichnet, daß ein dritter Lenker (42) zur Aufhängung der Querachse (36) an dem Tragrahmen (12) vorgesehen ist.

3. Hangausgleichseinrichtung nach Anspruch 1 oder 2, dadurch gekennzeichnet, daß sich die Lenker (34, 42) zueinander parallel und in Fahrtrichtung nach vorne von dem Tragrahmen (12) zu der Querachse (36) erstrecken.

4. Hangausgleichseinrichtung nach einem oder mehreren der vorherigen Ansprüche, dadurch gekennzeichnet, daß die Lenker (34, 42) beidenends für eine schwenkbare Anlenkung ausgebildet sind.

5. Hangausgleichseinrichtung nach einem oder mehreren der vorherigen Ansprüche, dadurch gekennzeichnet, daß die Querachse (36) in der vertikalen Richtung zwischen den beiden und dem dritten Lenker (34) und (42) angebracht ist, und zwar insbesondere oberhalb der beiden Lenker (34).

6. Hangausgleichseinrichtung nach einem oder mehreren der vorherigen Ansprüche, dadurch gekennzeichnet, daß eine Haltestange (62) zwischen der Querachse (36) und dem Tragrahmen (12) vorgesehen ist, die sich vorzugsweise nicht in der Richtung der Lenker (34, 42) erstreckt.

7. Hangausgleichseinrichtung nach einem oder mehreren der vorherigen Ansprüche, dadurch gekennzeichnet, daß an der Querachse (36) ein hydraulisch angetriebenes Getriebe angebaut ist.

8. Hangausgleichseinrichtung nach einem oder mehreren der vorherigen Ansprüche, dadurch gekennzeichnet, daß die Betätigungsvorrichtungen (52, 54) von zwei doppelt wirkenden linearen Hydraulikmotoren mit jeweils einer kolbenstangenseitigen Kammer (96) und einer kolbenseitigen Kammer (98) gebildet werden, wobei von einer Druckquelle (68) gelieferte Druckflüssigkeit der kolbenstangenseitigen Kammer (96) zugeführt wird und die kolbenseitigen Kammern (98) über eine Querleitung (100) miteinander in Verbindung stehen.

9. Hangausgleichseinrichtung nach einem oder mehreren der vorherigen Ansprüche, dadurch gekennzeichnet, daß den Betätigungsvorrichtungen (52, 54) Druckflüssigkeit über ein als 3/4-Wegeventil ausgebildetes Steuerventil (82) zugeführt wird, das von einer Regel- oder Steuervorrichtung (86) verstellbar ist, wobei die Regel- oder Steuervorrichtung (86) insbesondere mit einem Neigungsfühler versehen ist.

10. Hangausgleichseinrichtung nach Anspruch 8 oder 9, dadurch gekennzeichnet, daß in der Querleitung (100) für jede Betätigungsvorrichtung (52, 54) eine Strömungssicherung (102) eingesetzt ist.

## Claims

1. Levelling system for a vehicle, especially for a harvester (10), with a transverse axle (36) which can be coupled to a supporting frame (12) so as to be adjustable depending on the inclination of a slope, **characterised in that** the transverse axle (36) can be attached to the supporting frame (12) via at least two links (34), the height of which can be adjusted via actuating devices (52, 54).

2. Levelling system according to claim 1, **characterised in that** a third link (42) is provided for suspending the transverse axle (36) on the supporting frame (12).

3. Levelling system according to claim 1 or 2, **characterised in that** the links (34, 42) extend parallel to one another and in the direction of motion forward from the supporting frame (12) to the transverse axle (36).

4. Levelling system according to one or more of the preceding claims, **characterised in that** the links (34, 42) are designed at both ends for pivotal linking.

5. Levelling system according to one or more of the preceding claims, **characterised in that** the transverse axle (36) is fixed in the vertical direction between the two links and the third link (34) and (42), especially above the two links (34).

6. Levelling system according to one or more of the preceding claims, **characterised in that** a stay bar (62) is provided between the transverse axle (36) and the supporting frame (12), which bar preferably does not extend in the direction of the links (34, 42).

7. Levelling system according to one or more of the preceding claims, **characterised in that** a hydraulically driven transmission is mounted on the transverse axle (36).

8. Levelling system according to one or more of the preceding claims, **characterised in that** the actuating devices (52, 54) are formed by two double-acting linear hydraulic motors, each having a chamber (96) on the piston rod side and a chamber (98) on the piston side, hydraulic fluid supplied from a pressure source (68) being led into the chamber (96) on the piston rod side, and the chambers (98) on the piston side being interconnected via a transverse line (100).

9. Levelling system according to one or more of the preceding claims, **characterised in that** hydraulic fluid is led into the actuating devices (52, 54) via a control valve (82) designed as a three-position four-way valve and which can be adjusted by a regulating or control device (86), said device being especially provided with an inclination sensing device.

10. Levelling system according to claim 8 or 9, **characterised in that** a hydraulic flow safety device (102) is inserted in the transverse line (100) for each actuating device (52, 54).

## Revendications

1. Dispositif de compensation de pente pour un véhicule notamment pour une moissonneuse (10), comportant un axe transversal (36), qui peut être raccordé d'une manière réglable, en fonction d'une inclinaison, sur le support (12), caractérisé en ce que l'axe transversal (36) peut être monté sur le cadre de support (12) par l'intermédiaire d'au moins deux leviers articulés (34), qui sont réglables en hauteur au moyen de dispositifs d'actionnement (52,54).

2. Dispositif de compensation de pente selon la revendication 1, caractérisé en ce qu'un troisième levier articulé (42) est prévu pour réaliser la suspension de l'axe transversal (36) sur le cadre de support (12).

3. Dispositif de compensation de pente selon la revendication 1 ou 2, caractérisé en ce que les leviers articulés (34,42) sont parallèles et s'étendent vers l'avant, dans la direction de déplacement, à partir du cadre de support (12) en direction de l'axe transversal (36).

4. Dispositif de compensation de pente selon une ou plusieurs des revendications précédentes, caractérisé en ce que les leviers articulés (34,42) sont agencés, à leurs deux extrémités, pour réaliser une articulation pivotante.

5. Dispositif de compensation de pente selon une ou plusieurs des revendications précédentes, caractérisé en ce que l'axe transversal (36) est monté dans la direction verticale, entre les deux leviers articulés (34) et le troisième levier articulé (42), et ce notamment au-dessus des deux leviers articulés (34).

6. Dispositif de compensation de pente selon une ou plusieurs des revendications précédentes, caractérisé en ce qu'entre l'axe transversal (36) et le cadre de support (12) est prévue une barre de retenue (62) qui, de préférence, ne s'étend pas dans la direction des leviers (34,42).

7. Dispositif de compensation de pente selon une ou plusieurs des revendications précédentes, caractérisé en ce qu'une transmission à commande hydraulique est montée sur l'axe transversal (36).

8. Dispositif de compensation de pente selon une ou plusieurs des revendications précédentes, caractérisé en ce que les dispositifs d'actionnement (52,54) sont formés par deux moteurs hydrauliques linéaires à double effet, comportant chacun une chambre (96) située du côté de la tige de piston et une chambre (98) située du côté du piston, un liquide hydraulique délivré par une source de pression (68) étant envoyé à la chambre (96) située du côté de la tige de piston, tandis que les chambres (98) situées du côté du piston sont reliées entre elles par l'intermédiaire d'une canalisation transversale (100).

9. Dispositif de compensation de pente selon une ou plusieurs des revendications précédentes, caractérisé en ce qu'un liquide sous pression est envoyé aux dispositifs d'actionnement (52,54) par l'intermédiaire d'une soupape de commande (82) agencée sous la forme d'une soupape à 3/4 voies, qui est réglable par un dispositif de réglage ou de commande (86), le dispositif de réglage ou de commande (86) étant équipé notamment d'un détecteur d'inclinaison.

10. Dispositif de compensation de pente selon la revendication 8 ou 9, caractérisé en ce qu'un fusible (102) pour chaque dispositif d'actionnement (52, 54) est disposé dans la ligne transversale (100).
